# NEW EUROPEAN PATENT SPECIFICATION

(11) **EP 2 994 972 B2**
(45) Date of publication and mention of the opposition decision: **29.07.2026**
(45) Mention of the grant of the patent: 18.12.2019
(21) Application number: 14727060.7
(22) Date of filing: 01.05.2014
(51) Int. Cl.: H02J 5/00, H01F 38/14, H02J 7/02, H02J 50/10, H02J 50/40

(54) **NON-CONTACT POWER SUPPLY CIRCUIT**
KONTAKTFREIE ENERGIEVERSORGUNGSKREIS
CIRCUIT D'ALIMENTATION EN ENERGIE SANS CONTACT

(30) Priority: 09.05.2013 CN 201310170480
(43) Date of publication of application: 16.03.2016
(73) Proprietor: Tyco Electronics (Shanghai) Co., Ltd., Shanghai 200233 (CN)
(72) Inventor: DAI, Feng, Shanghai 200131 (CN); FAN, Mingjie, Shanghai 200131 (CN); SONG, Yuming, Shanghai 200131 (CN); WANG, Shaoyong, Shanghai 200131 (CN)
(74) Representative: Grünecker Patent- und Rechtsanwälte PartG mbB
(86) International application number: PCT/IB2014/061131
(87) International publication number: WO 2014/181227

(56) References cited:
- WO-A1-2013/018268
- WO-A2-2013/045999
- US-A- 4 684 869
- US-A1- 2005 140 482
- US-A1- 2010 314 946
- US-A1- 2011 121 660
- US-A1- 2012 007 439

## Description

### Field of the invention

The present invention relates to the field of power supply technology, and particularly to a non-contact power supply circuit.

### Background of the invention

Many electrical and electronic devices are composed of a fixed body and a moving part, for example, the moving part includes a rotational part such as washing machine door, refrigerator door etc. as well as a push-pull type moving part, such as refrigerator drawer. Since the end user of the equipment has more and more requirements on the easy-using characteristic and the appearance of the home appliances, many of the control and display functions are integrated on these moving parts. They are usually connected to the fixed body by using a hinge wire physical connection to the appliances via a specific connection means, so as to transfer electrical energy from the fixed body to the moving part. Such connection means is a challenge to the manufacture of these appliances, and because the relative positions of the moving part in use will change constantly, during the use of the appliances it is also prone to cause some physical wear and then cause some problems about safety, equipment life and maintenance issues.

For these reasons, the non-contact power transmission mode is introduced in the design of electrical and electronic devices, this mode is achieved according to the principle of electromagnetic coupling between the coils, and a circuit with such an electromagnetic coupling typically includes an electric power transmitting side and an electric power receiving side. The transmitting side includes a resonant circuit and a transmitting coil; the receiving side includes a receiving coil, a resonance circuit, a rectifier circuit and a DC transformer to supply power to the load. The load may be not only a rechargeable battery, but also a power consumption unit or module. Non-contact transmission of electrical energy may be achieved by an electric field or magnetic field coupled between the transmitting coil and the receiving coil, thus the coupling mode between the transmitting coil and the receiving coil plays a key role for the electric power transmission.

It is conventional to make use of direct correspondence between a transmitter coil and a receiver coil in practice. However, the coil is limited by the size of the installation location and environment in practical applications; in addition, the coupling efficiency of one to one direct correspondence coils will change as the position of the coil changes, which necessarily restricts the efficiency and transmitting power of the electrical energy, and thus the conventional mode cannot meet the needs of some home applications.

Published patent application WO 2013/045999 A2 describes a power transmitting device includes: a power transmitting portion that contactlessly transmits electric power to a power receiving portion spaced apart from the power transmitting portion; a first coil unit that is spaced apart from the power transmitting portion and that supplies electric power to the power transmitting portion; and a supply cable that is connected to the first coil unit and that supplies electric power from a power supply to the first coil unit. The first coil unit includes a first coil connected to the supply cable and a second coil connected to the first coil, and the first coil is arranged around, the power transmitting portion, converts unbalanced current, supplied from the power supply, to balanced current and supplies the balanced current to the second coil.

Published patent application US 2005/140482 A1 relates to a system and method for transferring power without requiring direct electrical conductive contacts. There is provided a primary unit having a power supply and a substantially laminar charging surface having at least one conductor that generates an electromagnetic field when a current flows therethrough and having a charging area defined within a perimeter of the surface, the at least one conductor being arranged such that electromagnetic field lines generated by the at least one conductor are substantially parallel to the plane of the surface or at least subtend an angle of 45 degrees or less to the surface within the charging area; and at least one secondary device including at least one conductor that may be wound about a core. Because the electromagnetic field is spread over the charging area and is generally parallel or near-parallel thereto, coupling with flat secondary devices such as mobile telephones and the like is significantly improved in various orientations thereof.

Published patent application US 2011/121660 A1 describes an electrical appliance comprising a connection to a power source and a principle electrical load, wherein the appliance additionally comprises at least one inductive power outlet, the inductive power outlet comprising: at least one driver, connectable to the power source, the driver for providing an oscillating voltage supply; and at least one primary inductive coil connected to the driver, the primary inductive coil for inductively coupling with an external secondary inductive coil wired to a second electrical load.

Published patent application US 2012/007439 A1 describes a power feeding apparatus, including: a power feeding portion adapted to feed an electric power in a wireless manner; and a storage body storing therein the power feeding portion. The storage body includes a main body, a first storage portion formed within the main body and storing therein the power feeding portion, and at least one second storage portion formed so as to be adapted to store or retrieve a power receiving apparatus as a storage object in or from the main body, the electric power of the power feeding portion stored in the first storage portion being adapted to be fed from the at least one second storage portion. At least a magnetically shielding portion is formed in an outer peripheral portion, and the at least one second storage portion forms a magnetically closed space in a state of being stored in the main body.

Published patent application WO 2013/018268 A1 describes a power transmission coil provided with a plurality of planar coils arranged concentric to each other within the same plane. The plurality of planar coils is connected parallel to each other. The plurality of planar coils is connected such that currents flow through the plurality of planar coils in the same direction. This power transmission coil is thin, and has high power transmission efficiency.

### SUMMARY OF THE INVENTION

In view of the above technical problem, it is desirable to provide a multi-coil matching based non-contact power supply circuit to satisfy different power requirements, different efficiency requirements, safety performance requirements, different installation environmental requirements, etc. In the different embodiments of the present invention, the non-contact power supply circuit is achieved by applying various combinations of the transmitting coil and the receiving coil and corresponding circuit.

This object is solved by the present invention as claimed in the appended independent claim. Advantageous embodiments of the present invention are defined by the appended dependent claims.

According to an example useful for understanding the present invention but not covered by the appended claims, it is provided a non-contact power supply circuit, the circuit comprises a primary circuit and a secondary circuit, the primary circuit transfers energy to the secondary circuit via electromagnetic coupling, wherein the primary circuit has at least one transmitting coil and the secondary circuit has at least one receiving coil, and the normal direction of the at least one transmitting coil and the normal direction of the at least one receiving coil are the same or have a first angle, characterized in that, the quantity of the at least one transmitting coil and the at least one receiving coil is greater than two.

In such a manner, more than one receiving coils or more than one transmitting coils may be arranged, and thus the receiving efficiency or the transmitting efficiency will be improved. Moreover, since more than one receiving coils or more than one transmitting coils may be arranged, the size of the individual coils can be ade smaller than that in case of using only one transmitting or receiving coil, and thus the limitation of the size of installation location is reduced. As a result, the non-contact power supply circuit may be applied to supply power to the appliances with different sizes.

According to an example useful for understanding the present invention but not covered by the appended claims, the at least one receiving coil is translationally movable with respect to the at least one transmitting coil.

In such a manner, the non-contact power supply circuit may be applied to the object which may be translationally movable, for example the two objects translationally moved with respect to each other, such as the refrigerator drawer mentioned in the part "Background of the invention". The primary circuit and the secondary circuit according to the present invention are arranged on the two objects translationally moved with respect to each other, so as to maintain a stable power supply during the translational movement.

In one example for understanding the present invention, the at least one receiving coil is rotationally movable with respect to the at least one transmitting coil.

In such a manner, the non-contact power supply circuit may be applied to the object which may be rotationally movable, for example the two objects rotationally moved with respect to each other, such as the refrigerator door mentioned in the part "Background of the invention". The primary circuit and the secondary circuit according to the present invention are arranged on the two objects rotationally moved with respect to each other, so as to maintain a stable power supply during the movement.

In one example for understanding the present invention, the at least one receiving coil and the at least one transmitting coil are disposed spaced. In such a manner, a better coupling can be ensured, and thus the electrical energy transmission efficiency can be improved.

In one example for understanding the present invention, the normal direction of the at least one transmitting coil and the normal direction of the at least one receiving coil are the same. In such a manner, a better coupling can be ensured, and thus the electrical energy transmission efficiency can be improved.

According to an example useful for understanding the present invention but not covered by the appended claims, the normal direction of the at least one receiving coil is parallel to the normal direction of the at least one transmitting coil, and the at least one receiving coil is rotationally movable around the normal direction of the at least one transmitting coil or the at least one transmitting coil is rotationally movable around the normal direction of the at least one transmit receiving coil. In such a manner, the non-contact power supply circuit according to the present invention can be applied in the solutions in which the primary coil may rotate around the secondary coil or the secondary coil may be rotate around the primary coil.

In one example for understanding the present invention, the secondary circuit including a rectifier, wherein the rectifier is configured to rectify the voltage generated by the at least one receiving coil into direct voltage. In such a manner, the voltage generated by the at least one receiving coil is rectified into direct voltage, so as to satisfy the requirements of the appliance which needs to use direct voltage.

In one example for understanding the present invention, the secondary circuit including a DC transformer coupled to the rectifier, wherein the DC transformer is configured to convert the voltage rectified by the rectifier into the voltage required by the load. In such a manner, a DC voltage corresponding to the DC appliance may be provided.

In one example for understanding the present invention, the load is a rechargeable battery. In such a manner, the rechargeable battery may be recharged by the electrical energy induced in the secondary coil, so as to save the electrical energy for using later.

In one embodiment of the present invention, the quantity of the at least one receiving coil is larger than or equal to two and the receiving coils are connected in series. Optionally, the quantity of the at least one transmitting coil is larger than or equal to two and the transmitting coils are connected in parallel. Alternatively or additionally, the quantity of the at least one transmitting coil is larger than or equal to two and the transmitting coils are connected in series. In such a manner, the transmitting power or transmitting efficiency of the non-contact power supply circuit according to the present invention is improved.

### Brief description of drawings

In the following, embodiments illustrated in connection with the drawings will be described in details, and the forgoing and other features of the invention will become more apparent.
Fig.1 illustrates a circuit diagram 100 of two different embodiments of the non-contact power supply circuit according to the present invention;
Fig.2a and Fig.2b illustrate two coil arrangement diagrams of two examples of the non-contact power supply circuit that are useful for understanding the present invention but not covered by the appended claims ;
Fig.3a and Fig.3b illustrate two coil arrangement diagrams of another two examples of the non-contact power supply circuit that are useful for understanding the present invention but not covered by the appended claims;
Fig.4a and Fig.4b illustrate two diagrams of two examples of the non-contact power supply circuit that are useful for understanding the present invention but not covered by the appended claims , in these two embodiments the coils may be translationally movable with respect to each other; and
Fig.5a and Fig.5b illustrate two diagrams of two embodiments of the non-contact power supply circuit according to the present invention; in these two embodiments the coils may be rotationally movable with respect to each other.

Identical or similar components will be denoted with identical or similar reference numerals throughout the drawings

### Detailed description of embodiments

In the following detailed description of preferred embodiments, reference will be made to the drawings. By way of examples, the drawings illustrate particular embodiments in which the invention can be practiced. It can be appreciated that other embodiments can be utilized instead thereof or structural and logic modifications can be made thereto without departing from the scope of the invention. Accordingly, the following detailed description is not to be construed as being limiting, and the scope of the invention will be defined in the appended claims.

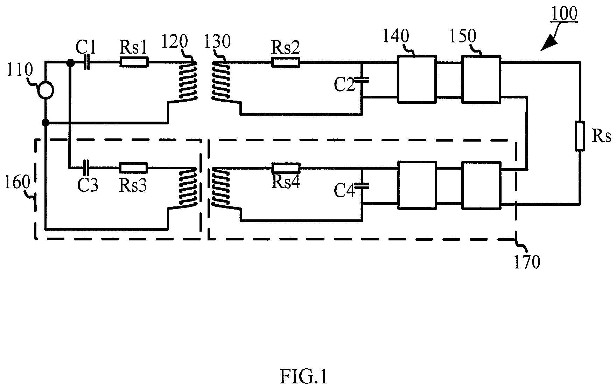

Fig.1 illustrates a non-contact power supply circuit according to the present invention, the non-contact power supply circuit comprises a primary circuit and a secondary circuit, the primary circuit transfers energy to the secondary circuit via electromagnetic coupling, wherein the primary circuit has at least one transmitting coil 120 and the secondary circuit has at least one receiving coil 130, and the normal direction of the at least one transmitting coil 120 and the normal direction of the at least one receiving coil 130 are the same or have a first angle, and the quantity of the at least one transmitting coil and the at least one receiving coil is greater than two. As can be seen from Figure 1, the whole circuit is vertically symmetrical, wherein the primary circuit side has a power source 110, which supplies power to the two circuits parallel connected with each other, wherein one of the two circuits is circuit 160, and the other is the circuit composed of C1, Rs1 and the coil 120. Primary circuit transmits power to the secondary coil 130 or to the receiving coil of the additional circuit 170 via electromagnetic coupling respectively, and electrical energy generated in the secondary circuit is rectified by the rectifier 140 and then converted into a direct voltage with a certain voltage by the transformer 150, so as to supply power to the appliance Rs.

However, the embodiment illustrated in Figure 1 is only illustrative and not used for limiting. As long as the principle shown in Figure 1 is applied and the quantity of at least one transmitting coil 120 and at least one receiving coil 130 is greater than the number of two, such a circuit would fall within the scope claimed in the present invention. That is, the skilled person will appreciate that the two transmitting circuits of the primary circuit can also be connected in series, so that the two transmitting circuits are incorporated into a transmitting circuit having two transmitting coils (meanwhile only one set of the two set of capacitors and resistors for filtering needs to be kept); accordingly, the secondary circuit of the two receiving circuits can be connected in parallel, so that the two circuits are used as a backup circuit to each other.

Further, the quantity of the coils in the embodiment illustrated in Figure 1 is only illustrative and not restrictive, i.e., as long as the total quantity of the coils is more than two, for example, a combination of one transmitting coil and at least two receiving coils, a combination of at least two transmitting coils and one receiving coil, and a combination of at least two transmitting coils and at least two receiving coils are intended to fall within the scope of the invention.

Because the power carried by a single coil is limited, in order to improve the power of the whole system, a plurality of transmitting and receiving coils are used, and accordingly the circuits have different combinations: in an embodiment of the present invention, the quantity of at least one receiving coil is greater than or equal to the number of two and the receiving coils are connected in series. Optionally, the quantity of the at least one transmitting coil is larger than or equal to two and the transmitting coils are connected in parallel. Alternatively or additionally, the quantity of the at least one transmitting coil is larger than or equal to two and the transmitting coils are connected in series. In such a manner, the transmitting power or transmitting efficiency of the non-contact power supply circuit according to the present invention is improved.

In such a manner, more than one receiving coil or more than one transmitting coil may be arranged, and thus the receiving efficiency or the transmitting efficiency will be improved. Moreover, since more than one receiving coil or more than one transmitting coil may be arranged, the size of the individual coils can be made smaller than that in case of using only one transmitting or receiving coil, and thus the limitation of the size of installation location is reduced. As a result, the non-contact power supply circuit may be applied to supply power to the appliances with different sizes.

The efficiency of electrical energy transmission in non-contact power supply circuit is mainly determined by the strength of magnetic coupling between the transmitting coil and the receiving coil, and thereby a plurality of receiving coils are placed around a single transmitting coil, so that the receiving coils can receive a sufficient magnetic flux to improve the utilization of the flux of the transmitting coil, and thereby to improve efficiency.

The following drawings description will illustrate how to adapt the coils of the present invention to different application scenarios, in which the position of the coils placement is important.

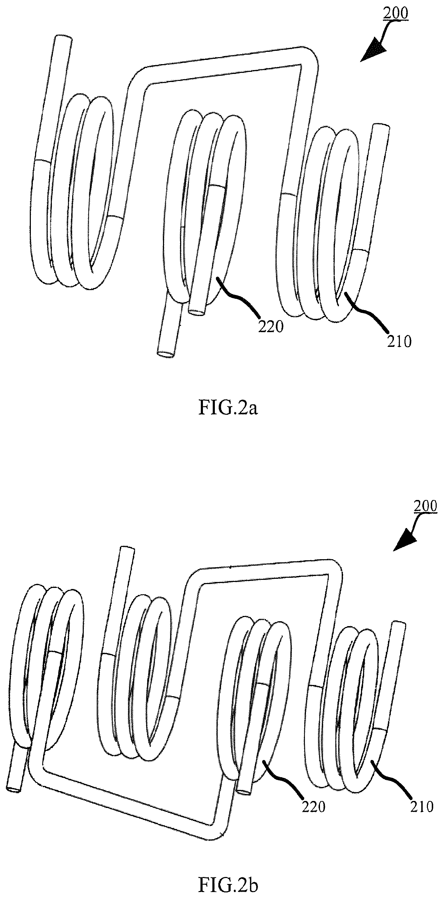

Figure 2a and Figure 2b show two examples 200 of a non-contact power supply circuit, it can be seen from Figures 2a, a first coil 210 is placed on both sides of the second coil 220, so that the use of two second coils will greatly improve the efficiency of energy transfer.

Here, the skilled person will appreciate that, the quantity of the transmitting coil can also be two or more like the quantity of the receiving coil, so as to improve the transmitted power, and the efficiency is also improved while improving the overall transmitted power to meet the needs of the load which needs more power. Specifically, as shown in Figure 2b, the first coil 210 and the second coil 220 is disposed spaced.

In the examples illustrated in Figures 2a and 2b, at least one transmitting coil and at least one receiving coil are disposed spaced. In such a way, a better coupling is ensured to improve the power transmission efficiency. In the above example, the normal direction of the at least one receiving coil and the normal direction of the at least one transmitting coil are the same. In such a way, a better coupling is ensured to improve the power transmission efficiency.

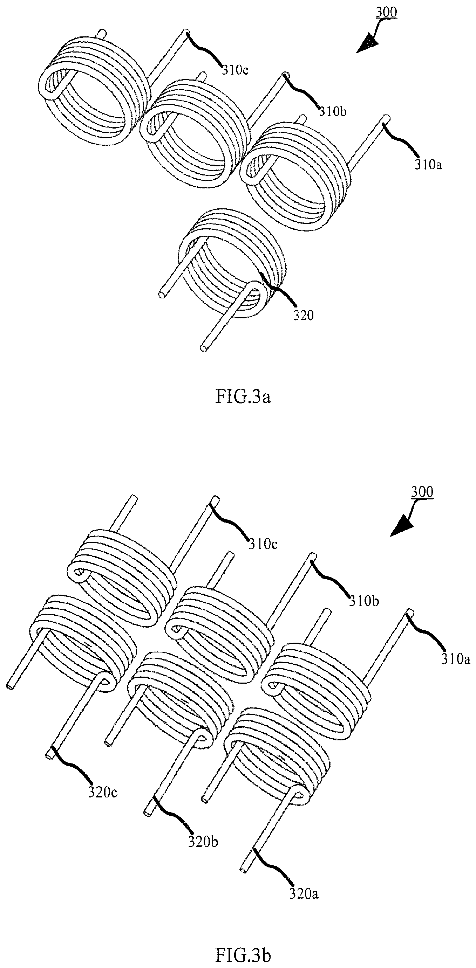

However, other forms are also possible to be placed, for example, the coil placement 300 of non-contact power supply circuit according to the examples shown in Figures 3a and 3b, the first coils 310a, 310b, 310c and the second coils 320 (Figure 3a) or 320a, 320b, and 320c are placed opposite to each other, so that the power transmission efficiency or absolutely transmitted power can be improved.

The following description will describe the relative position of coils in the specific examples and embodiments of the non-contact power supply circuit.

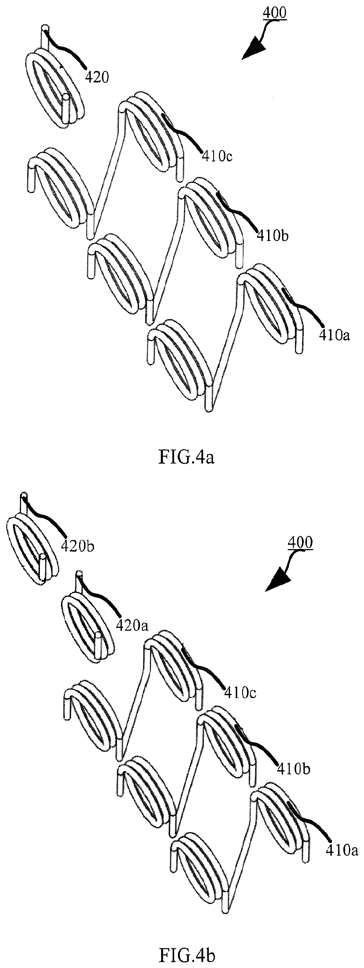

Fig.4a and Fig.4b illustrate two diagrams of two examples 400 of the non-contact power supply circuit, in these two examples the coils may be translationally movable with respect to each other. As shown in Figs. 4a and 4b, the first coils 410a, 410b and 410c form a passageway, through which the second coil 420 (Figure 4a) or the second coils 420a, 420b may pass, so that the first coil and second coil may be translationally movable with respect to each other, the examples illustrated in Fig.4a and 4b are especially advantageous for applications such as refrigerator drawer, namely in such a way, the non-contact power supply circuit may be applied to the object which may be translationally movable, for example the two objects translationally moved with respect to each other, such as the refrigerator drawer mentioned in the part "Background of the invention". The primary circuit and the secondary circuit according to the present invention are arranged on the two objects translationally moved with respect to each other, so as to maintain a stable power supply during the translational movement.

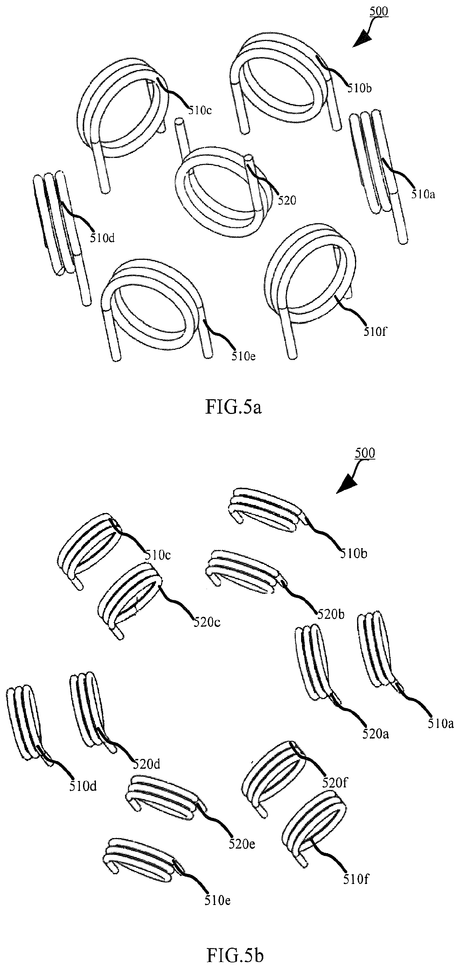

Fig.5a and Fig.5b illustrate two diagrams of two embodiments 500 of the non-contact power supply circuit according to the present invention; in these two embodiments the coils may be rotationally movable with respect to each other. As shown in Figs. 5a and 5b, the first coils 510a, 510b, 510c, 510d, 510e and 510f surrounds the second coil 520 (Figure 5a) or the second coils 520a, 520b, 520c, 520d, 520e, and 520f., so that the first coils and second coils may be rotationally movable with respect to each other, the embodiments illustrated in Fig.5a and 5b are especially advantageous for applications such as refrigerator doors, namely in such a way, the non-contact power supply circuit may be applied to the object which may be rotationally movable, for example the two objects rotationally moved with respect to each other, such as the refrigerator doors mentioned in the part "Background of the invention". The primary circuit and the secondary circuit according to the present invention are arranged on the two objects rotationally moved with respect to each other, so as to maintain a stable power supply during the movement.

Those ordinarily skilled in the art can appreciate and make other variants to the disclosed embodiments upon study of the description, the disclosure, the drawings and the claims. In the claims, the term "comprise" will not preclude another element or step, and the term "a/an" will not prelude plural. In a practical application of the invention, an element may perform functions of a plurality of technical features recited in a claim. Any reference numerals in the claims shall not be construed to be limiting of the scope of the invention.

## Claims

1. A non-contact power supply circuit supplying power to an appliance, the non-contact power supply circuit comprising:
a primary circuit adapted to be arranged on a first part of the appliance, and
a secondary circuit adapted to be arranged on a second part of the appliance which is rotationally movable relative to the first part,
the primary circuit being configured to transfer energy to the secondary circuit via electromagnetic coupling, wherein the primary circuit has at least one transmitting coil (510a - 510f) and the secondary circuit has at least one receiving coil (520; 520a-520f), and a normal direction of the at least one transmitting coil (120) and a normal direction of the at least one receiving coil (520; 520a-520f) are the same or have a first angle,
**characterized in that**
the quantity of coils formed by the at least one transmitting coil (510a - 510f) and the at least one receiving coil (520; 520a-520f) is greater than two,
wherein the at least one transmitting coil (510a-510f) and the at least one receiving coil (520; 520a-520f) are adapted to be respectively arranged on the first and second parts of the appliance and disposed relative to each other so that, the at least one receiving coil (520; 520a-520f) is relatively positioned to surround or to be surrounded by the at least one transmitting coil (510a - 510f), and
when the first and the second parts rotationally move with respect to each other, one or more of the at least one receiving coil (520; 520a-520f) is positioned with respect to the at least one transmitting coil (510a-510f) to receive energy via electromagnetic coupling from one or more of the at least one transmitting coil (510a-510f), thereby maintaining a stable power supply during a rotational movement between the first and second parts;
wherein said appliance is a home appliance.

2. The non-contact power supply circuit according to claim 1, **characterized in that** the at least one receiving coil (520) is relatively positioned to be surrounded by the at least one transmitting coil (510a - 510f)¹, wherein the at least one receiving coil (520) is a single receiving coil (520) which is disposed between two (510e, 510b) of the at least one transmitting coil (510a-510f) ².
¹ Reference to second option of Claim 2
² Fig. 5a

3. The non-contact power supply circuit according to claim 12, **characterized in that** the normal direction of the at least one transmitting coil (120; 410a-410c) and the normal direction of the at least one receiving coil (130; 420) are the same.

4. The non-contact power supply circuit according to claim 21, **characterized in that** the normal direction of each of the at least one receiving coil (520) and the normal direction of each of the at least one transmitting coil (510a-510f) are on substantially a same plane³
³ Figs. 5a, 5b;,

5. The non-contact power supply circuit according to claim 1, **characterized in that** the secondary circuit includes a rectifier (140), wherein the rectifier (140) is configured to rectify the voltage generated by the at least one receiving coil (130) into direct voltage.

6. The non-contact power supply circuit according to claim 5, **characterized in that** the secondary circuit includes a DC transformer coupled to the rectifier, wherein the DC transformer (150) is configured to convert the voltage rectified by the rectifier (140) into the voltage required by the load.

7. The non-contact power supply circuit according to claim 6, **characterized in that** the load is a rechargeable battery.

8. The non-contact power supply circuit according to claim 1, **characterized in that** the quantity of the at least one receiving coil (130; 420-420b) is larger than or equal to two and the receiving coils are connected in series.

9. The non-contact power supply circuit according to claim 1, **characterized in that** the quantity of the at least one transmitting coil (120; 410a-410c) is larger than or equal to two and the transmitting coils are connected in parallel.

10. The non-contact power supply circuit according to claim 1, **characterized in that** the quantity of the at least one transmitting coil (120; 310a-310c; 410a-410c) is larger than or equal to two and the transmitting coils are connected in series.

## Patentansprüche

1. Kontaktfreier Energieversorgungskreis zum Zuführen von Leistung zu einem Gerät, wobei der kontaktfreie Energieversorgungskreis aufweist:
einen primären Kreis, der ausgebildet ist, an einem ersten Teil des Geräts angeordnet zu werden, und
einen sekundären Kreis, der ausgebildet ist, an einem zweiten Teil des Geräts, der relativ zu dem ersten Teil drehbar ist, angeordnet zu werden,
wobei der primäre Kreis ausgebildet ist, über elektromagnetische Kopplung Energie auf den sekundären Kreis zu übertragen, wobei der primäre Kreis mindestens eine Übertragungsspule (510a-510f) aufweist und der sekundäre Kreis mindestens eine Empfangsspule (520; 520a-520f) aufweist, und eine Normalenrichtung der mindestens einen Übertragungsspule (120) und eine Normalenrichtung der mindestens einen Empfangsspule (520; 520a-520f) gleich sind oder einen ersten Winkel zueinander haben,
**dadurch gekennzeichnet, dass**
die Anzahl an Spulen, die durch die mindestens eine Übertragungsspule (510a-510f) und die mindestens eine Empfangsspule (520; 520a-520f) gebildet ist, größer als zwei ist,
wobei die mindestens eine Übertragungsspule (510a-510f) und die mindestens eine Empfangsspule (525; 520a-520f) ausgebildet sind, entsprechend an dem ersten und dem zweiten Teil des Geräts angeordnet zu werden und relativ zueinander derart positioniert zu werden, dass die mindestens eine Empfangsspule (520; 520a-520f) eine relative Stellung so hat, dass sie die mindestens eine Übertragungsspule (510a-510f) umgibt oder von dieser umgeben wird, und
wenn der erste und der zweite Teil sich relativ zueinander drehen, eine oder mehrere der mindestens einen Empfangsspule (520; 520a-520f) in Bezug auf die mindestens eine Übertragungsspule (510a-510f) so positioniert ist, dass durch elektromagnetische Kopplung Energie aus einer oder mehreren der mindestens einen Übertragungsspule (510a-510f) empfangen wird, wodurch eine stabile Leistungsversorgung während einer Drehbewegung zwischen dem ersten und dem zweiten Teil aufrechterhalten wird,
wobei es sich bei dem genannten Gerät um ein Haushaltsgerät handelt.

2. Kontaktfreier Energieversorgungskreis nach Anspruch 1, **dadurch gekennzeichnet, dass** die mindestens eine Empfangsspule (520) relativ positioniert ist, um von der mindestens einen Übertragungsspule (510a-510f) umgeben zu sein, wobei die mindestens eine Empfangsspule (520) eine einzelne Empfangsspule (520) ist, die zwischen zwei (510e, 510b) der mindestens einen Übertragungsspule (510a-510f) angeordnet ist.

3. Kontaktfreier Energieversorgungskreis nach Anspruch 1, **dadurch gekennzeichnet, dass** die Normalenrichtung der mindestens einen Übertragungsspule (120; 410a-410c) und die Normalenrichtung der mindestens einen Empfangsspule (130; 420) gleich sind.

4. Kontaktfreier Energieversorgungskreis nach Anspruch 1, **dadurch gekennzeichnet, dass** die Normalenrichtung jeder der mindestens einen Empfangsspule (520) und die Normalenrichtung jeder der mindestens einen Übertragungsspule (510a-510f) im Wesentlichen auf derselben Ebene liegen.

5. Kontaktfreier Energieversorgungskreis nach Anspruch 1, **dadurch gekennzeichnet, dass** der sekundäre Kreis einen Gleichrichter (140) aufweist, wobei der Gleichrichter (140) ausgebildet ist, die durch die mindestens eine Empfangsspule (130) erzeugte Spannung in eine Gleichspannung gleichzurichten.

6. Kontaktfreier Energieversorgungskreis nach Anspruch 5, **dadurch gekennzeichnet, dass** der sekundäre Kreis einen Gleichstrom-Transformator, der mit dem Gleichrichter gekoppelt ist, aufweist, wobei der Gleichstrom-Transformator (150) ausgebildet ist, die von dem Gleichrichter (140) gleichgerichtete Spannung in die Spannung umzuwandeln, die von dem Verbraucher benötigt wird.

7. Kontaktfreier Energieversorgungskreis nach Anspruch 6, **dadurch gekennzeichnet, dass** der Verbraucher eine aufladbare Batterie ist.

8. Kontaktfreier Energieversorgungskreis nach Anspruch 1, **dadurch gekennzeichnet, dass** die Anzahl der mindestens einen Empfangsspule (130; 420-420b) größer gleich zwei ist und die Empfangsspulen in Reihe geschaltet sind.

9. Kontaktfreier Energieversorgungskreis nach Anspruch 1, **dadurch gekennzeichnet, dass** die Anzahl der mindestens einen Übertragungsspule (120; 410a-410c) größer oder gleich zwei ist und die Übertragungsspulen parallel geschaltet sind.

10. Kontaktfreier Energieversorgungskreis nach Anspruch 1, **dadurch gekennzeichnet, dass** die Anzahl der mindestens einen Übertragungsspule (120; 310a-310c; 410a-410c) größer gleich zwei ist und die Übertragungsspulen in Reihe geschaltet sind.

## Revendications

1. Circuit d'alimentation sans contact fournissant de l'énergie à un appareil, le circuit d'alimentation sans contact comprenant :
un circuit primaire adapté pour être agencé sur une première partie de l'appareil, et
un circuit secondaire adapté pour être agencé sur une deuxième partie de l'appareil qui peut se déplacer en rotation par rapport à la première partie,
le circuit primaire étant configuré pour transférer de l'énergie au circuit secondaire par l'intermédiaire d'un couplage électromagnétique, dans lequel le circuit primaire comporte au moins une bobine d'émission (510a - 510f) et le circuit secondaire comporte au moins une bobine de réception (520 ; 520a-520f), et une direction normale auxdites au moins une bobines d'émission (120) et une direction normale auxdites au moins une bobines de réception (520 ; 520a-520f) sont identiques ou présentent un premier angle,
**caractérisé en ce que**
le nombre de bobines formées par lesdites au moins une bobines d'émission (510a - 510f) et par lesdites au moins une bobines de réception (520 ; 520a-520f) est supérieur à deux,
dans lequel lesdites au moins une bobines d'émission (510a-510f) et lesdites au moins une bobines de réception (520 ; 520a-520f) sont adaptées pour être agencées respectivement sur les première et deuxième parties de l'appareil et disposées les unes par rapport aux autres de telle sorte que lesdites au moins une bobines de réception (520 ; 520a-520f) sont positionnées de manière relative pour entourer, ou être entourées par, lesdites au moins une bobines d'émission (510a-510f), et
lorsque les première et deuxième parties se déplacent en rotation les unes par rapport aux autres, une ou plusieurs desdites au moins une bobines de réception (520 ; 520a-520f) sont positionnées par rapport auxdites au moins une bobines d'émission (510a-510f) pour recevoir de l'énergie par l'intermédiaire d'un couplage électromagnétique à partir d'une ou plusieurs desdites au moins une bobines d'émission (510a-510f), ce qui maintient de ce fait une alimentation électrique stable pendant un mouvement de rotation entre les première et deuxième parties ;
dans lequel ledit appareil est un appareil ménager.

2. Circuit d'alimentation sans contact selon la revendication 1, **caractérisé en ce que** lesdites au moins une bobines de réception (520) sont positionnées de manière relative pour être entourées par lesdites au moins une bobines d'émission (510a - 510f), dans lequel lesdites au moins une bobines de réception (520) consistent en une bobine de réception unique (520) qui est disposée entre deux bobines (510e, 510b) desdites au moins une bobines d'émission (510a-510f).

3. Circuit d'alimentation sans contact selon la revendication 1, **caractérisé en ce que** la direction normale auxdites au moins une bobines d'émission (120 ; 410a-410c) et la direction normale auxdites au moins une bobines de réception (130 ; 420) sont identiques.

4. Circuit d'alimentation sans contact selon la revendication 1, **caractérisé en ce que** la direction normale à chacune desdites au moins une bobines de réception (520) et la direction normale à chacune desdites au moins une bobines d'émission (510a-510f) se trouvent substantiellement dans le même plan.

5. Circuit d'alimentation sans contact selon la revendication 1, **caractérisé en ce que** le circuit secondaire inclut un redresseur (140), dans lequel le redresseur (140) est configuré pour redresser en tension continue la tension générée par lesdites au moins une bobines de réception (130).

6. Circuit d'alimentation sans contact selon la revendication 5, **caractérisé en ce que** le circuit secondaire inclut un transformateur en courant continu couplé au redresseur, dans lequel le transformateur en courant continu (150) est configuré pour convertir la tension redressée par le redresseur (140) en la tension demandée par la charge.

7. Circuit d'alimentation sans contact selon la revendication 6, **caractérisé en ce que** la charge est une batterie rechargeable.

8. Circuit d'alimentation sans contact selon la revendication 1, **caractérisé en ce que** le nombre desdites au moins une bobines de réception (130 ; 420-420b) est supérieur ou égal à deux, et **en ce que** les bobines de réception sont connectées en série.

9. Circuit d'alimentation sans contact selon la revendication 1, **caractérisé en ce que** le nombre desdites au moins une bobines d'émission (120 ; 410a-410c) est supérieur ou égal à deux, et **en ce que** les bobines d'émission sont connectées en parallèle.

10. Circuit d'alimentation sans contact selon la revendication 1, **caractérisé en ce que** le nombre desdites au moins une bobines d'émission (120 ; 310a-310c ; 410a-410c) est supérieur ou égal à deux, et **en ce que** les bobines d'émission sont connectées en série.
